(19)

Europäisches Patentamt
European Patent Office
Office européen des brevets

(11) EP 3 795 858 A1

(12) EUROPEAN PATENT APPLICATION
published in accordance with Art. 153(4) EPC

(43) Date of publication:
24.03.2021 Bulletin 2021/12

(51) Int Cl.:
F16H 1/32 (2006.01)    F16H 55/08 (2006.01)

(21) Application number: 18918976.4

(22) Date of filing: 14.05.2018

(86) International application number:
PCT/JP2018/018612

(87) International publication number:
WO 2019/220515 (21.11.2019 Gazette 2019/47)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
KH MA MD TN

(71) Applicant: Harmonic Drive Systems Inc.
Shinagawa-ku
Tokyo 140-0013 (JP)

(72) Inventors:
• SHIROKOSHI, Norio
  Azumino-shi, Nagano 399-8305 (JP)
• KODAIRA, Takeo
  Azumino-shi, Nagano 399-8305 (JP)
• YAMAZAKI, Hiroshi
  Azumino-shi, Nagano 399-8305 (JP)

(74) Representative: Schmitt-Nilson Schraud Waibel Wohlfrom
Patentanwälte Partnerschaft mbB
Pelkovenstraße 143
80992 München (DE)

(54) **WAVE GEAR DEVICE**

(57)    The tooth profile contours of a rigid internally toothed gear (2) and a flexible externally toothed gear (3) in this strain wave gearing (1) are stipulated by: meshing portions (26, 36) which each mesh with the opposing gear; tooth-crest-side convex surface portions (27, 37) which, respectively, are smoothly connected to the addendum-side ends of the meshing portions (26, 36) and extend from said ends to the apices of the tooth crests; and tooth-bottom-side concave surface portions (28, 38) which, respectively, are smoothly connected to the dedendum-side ends of the meshing portions and extend from said ends to the deepest parts of the tooth bottoms. The meshing portions and tooth-crest-side convex surface portions are machined portions that are simultaneously machined by topping gear cutting, and there are no edges on the teeth of either gear on the tooth-crest side. When both teeth (24, 34) begin to mesh, or the like, it is possible to form a smooth mesh and to restrict wear caused by tooth interference.

FIG. 2

EP 3 795 858 A1

## Description

TECHNICAL FIELD

The present invention relates to a strain wave gearing, and particularly relates to a strain wave gearing in which teeth of a flexible gear mesh smoothly with teeth of a rigid gear at, *inter alia,* the start of meshing.

BACKGROUND ART

Reference rack tooth profiles (involute curve tooth profiles), with which gears are easily cut, are widely employed as basic tooth profiles of strain wave gearings. The utilization of an involute curve tooth profile is proposed in Patent Document 1.

Commonly used strain wave gearings comprise a rigid internally toothed gear, a flexible externally toothed gear, and a wave generator that causes the externally toothed gear to ellipsoidally flex and mesh with the internally toothed gear. Teeth of the externally toothed gear are caused by the wave generator to repeatedly flex at a constant amplitude in a radial direction, and these teeth repeatedly go into and come out of mesh with the internally toothed gear. A motion locus of the meshing of the externally toothed gear with the internally toothed gear can be shown by rack approximation. For example, Fig. 7 of Patent Document 2 shows a state of movement from a state in which an externally toothed gear is out of mesh with an internally toothed gear to a state of deepest meshing between these two gears (a state of movement from a state of deepest meshing to an out-of-mesh state).

PRIOR ART LITERATURE

Patent Documents

Patent Document 1: JP-B 45-41171
Patent Document 2: WO 2016/006102 A1

DISCLOSURE OF THE INVENTION

PROBLEMS TO BE SOLVED BY THE INVENTION

In the machining of an internally toothed gear and an externally toothed gear of a strain wave gearing, addendum circles are commonly determined through turning in a step preceding gear cutting. An addendum circle that has been turned remains even after gear cutting, and a portion where a tooth profile contour and an addendum circle intersect becomes an edge. An edge formed in a tooth crest portion could possibly have an adverse effect on gear meshing or wear. Particularly, when the teeth begin to mesh, there is concern that the edge will interfere with the teeth of the opposing gear, the teeth will be unable to mesh smoothly, and there will be wear on teeth flanks. For example, at times such as when the teeth begin to mesh, the flexible externally toothed gear flexurally deforms under a load, and there are cases in which the flexed shape of the externally toothed gear deviates from a design. In these cases, the edge of the externally toothed gear on the tooth-crest side interferes with the teeth of the internally toothed gear, causing wear.

With the foregoing in view, it is an object of the present invention to provide a strain wave gearing comprising teeth profiles with which smooth meshing can be achieved at times such as when the teeth begin to mesh, and wear caused by teeth interference can be minimized.

MEANS OF SOLVING THE MENTIONED PROBLEMS

To solve the above-mentioned problems, the present invention provides a strain wave gearing comprising a rigid gear, a flexible gear capable of meshing with the rigid gear, and a wave generator that causes the flexible gear to flex in a radial direction and partially mesh with the rigid gear and causes positions where the flexible gear meshes with the rigid gear to move in a circumferential direction of the rigid gear along with rotation, wherein

tooth profile contours of the rigid gear and the flexible gear (contour shapes of tooth profile cross sections cut along an orthogonal plane that is orthogonal to a tooth-trace direction) are each stipulated according to:

a meshing portion (meshing tooth flank portion) where the gear meshes with the opposing gear;
a tooth-crest-side convex surface portion (tooth-crest-side tooth flank portion stipulated by a convex surface) that smoothly connects to an addendum-side end of the meshing portion and extends from the addendum-side end to an apex of the tooth crest; and
a tooth-bottom-side concave surface portion (tooth-bottom-side tooth flank portion stipulated by a concave surface) that smoothly connects to a dedendum-side end of the meshing portion and extends from the dedendum-side end to a deepest part of the tooth bottom.

Topping gear cutting is used in the machining of the rigid gear and flexible gear provided with the tooth profile contours according to the present invention. When the tooth profiles of these gears are designed, there are no addendum circles and the tooth profile contours are stipulated up to the apices of the teeth. A topping tooth profile of a hob cutter or a pinion cutter used in gear cutting is designed using a tooth profile contour stipulated as the addendum portion up to the apex of the tooth.

In the tooth profile contours according to the present invention, there are no edges in the tooth-crest sides of the respective flanks of the teeth of the two gears.

It is therefore possible to overcome the negative effect of an edge interfering with the tooth flank of the opposite gear as a result of, *inter alia,* flexural deformation of the flexible gear. As a result, the two gears can smoothly mesh together, and wear caused by teeth interference can be minimized. Furthermore, due to the tooth-crest-side convex surface portion, tooth depth is also greater than in a prior-art edged tooth provided with a flat tooth crest surface. Ratcheting torque of the strain wave gearing can thereby also increase.

Assuming the rigid gear and the flexible gear are both gears of module m, the tooth-crest-side convex surface portions and the tooth-bottom-side concave surface portions are set so that a gap △, which is at maximum 0.5m in a most deeply meshed state, is formed between the rigid gear and the flexible gear.

$$0 < \varDelta \le 0.5m$$

BRIEF DESCRIPTION OF THE DRAWINGS

Figure 1(a) is a schematic longitudinal cross-sectional view of a strain wave gearing according to an embodiment of the present invention, and Figure 1(b) is an explanatory drawing of a meshed state of an externally toothed gear and an internally toothed gear of the strain wave gearing; and
Figure 2(a) is an explanatory drawing of tooth profile contours of the externally toothed gear and the internally toothed gear of the strain wave gearing of Fig. 1, and Figure 2(b) is an explanatory drawing of a meshed state of the teeth created through rack approximation.

MODE FOR CARRYING OUT THE INVENTION

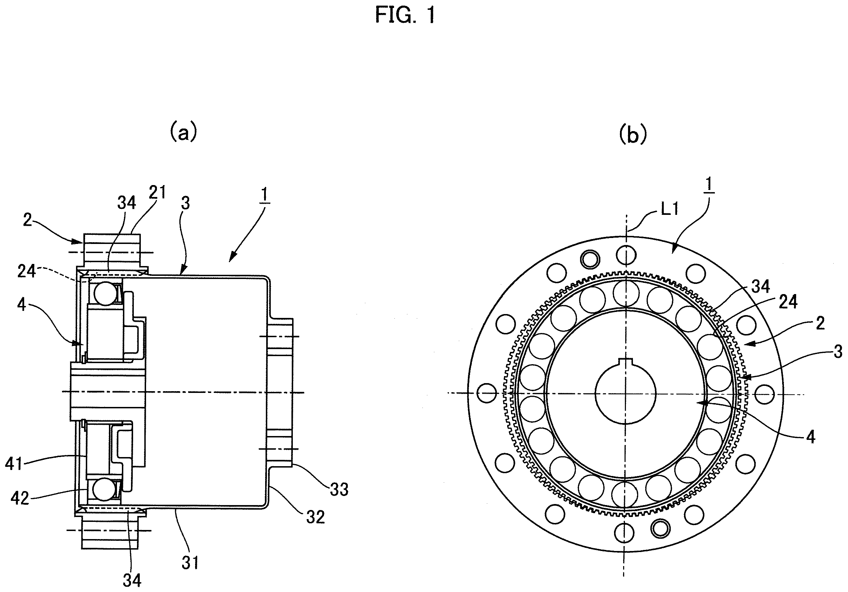

An embodiment of a strain wave gearing to which the present invention is applied is described below with reference to the drawings. Fig. 1(a) is a schematic longitudinal cross-sectional view of the strain wave gearing, and Fig. 1(b) is an explanatory drawing of a meshed state of an externally toothed gear and an internally toothed gear of the strain wave gearing.

A strain wave gearing 1 is provided with a rigid internally toothed gear 2 (rigid gear), a flexible externally toothed gear 3 (flexible gear) coaxially disposed on the inner side of the internally toothed gear 2, and a wave generator 4 fitted into the inner side of the externally toothed gear 3. The internally toothed gear 2 is provided with a rigid annular body 21 and internal teeth 24 formed on a circular internal peripheral surface of the annular body 21. The externally toothed gear 3 has a cup shape and is provided with a cylindrical barrel part 31, an annular diaphragm 32 extending radially inward from one end of the cylindrical barrel part 31, and a rigid discoidal boss 33 formed so as to be continuous with the internal peripheral edge of the annular diaphragm 32. External teeth 34 are formed on an external peripheral surface portion of the barrel part 31, on a side nearer to an open end. The internally toothed gear 2 and the externally toothed gear 3 together constitute a spur gear of module m, and the external teeth 34 are able to mesh with the internal teeth 24.

The wave generator 4 is provided with an ellipsoidally contoured rigid cam 41, and a wave bearing 42 provided with a flexible bearing raceway fitted over the external peripheral surface of the rigid cam 41. The wave generator 4 causes ellipsoidal flexure in a portion of the externally toothed gear 3 on the open-end side of the barrel part 31, as shown in Fig. 1(b). Portions of the external teeth 34 positioned at both ends of the ellipsoid along a long-axis direction L1 mesh with the internal teeth 24 of the internally toothed gear 2.

For example, the internally toothed gear 2 is secured to a secured-side member (not shown), and the wave generator 4 is rotatably driven by a motor, etc. When the wave generator 4 rotates, the meshing positions of the gears 2, 3 move in a circumferential direction. The difference in the number of teeth between the gears is 2n (n being a positive integer), and relative rotation that is greatly reduced relative to the rotation of the wave generator 4 occurs between the gears due to the difference in the number of teeth. Because the internally toothed gear 2 is secured, the externally toothed gear 3 rotates and reduced rotation is outputted to a load side (not shown) connected to the externally toothed gear 3.

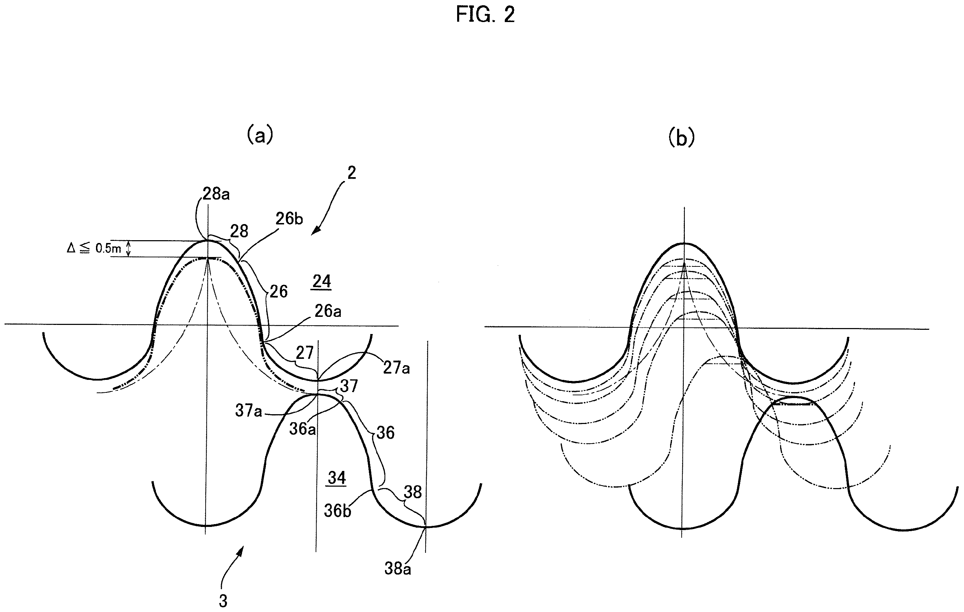

Fig. 2(a) is an explanatory drawing of tooth profile contours of the internal teeth 24 of the internally toothed gear 2 and the external teeth 34 of the externally toothed gear 3 (contour shapes of tooth profile cross-sections cut along an orthogonal plane orthogonal to a tooth-trace direction). The tooth profile contour (tooth flank shape) of the internal teeth 24 is provided with a meshing portion 26 (meshing tooth flank portion) that meshes with the opposing externally toothed gear 3. The tooth profile shape stipulating the meshing portion 26 is stipulated by an involute curve tooth profile employed in the prior art and another known tooth profile shape. One end of a tooth-crest-side convex surface portion 27 (tooth-crest-side tooth flank portion stipulated by a convex surface) smoothly connects to an addendum-side end 26a of the meshing portion 26. The tooth-crest-side convex surface portion 27 extends from the addendum-side end 26a to a tooth-crest apex 27a of the internal tooth 24. One end of a tooth-bottom-side concave surface portion 28 (tooth-bottom-side tooth flank portion stipulated by a concave surface) smoothly connects to a dedendum-side end 26b of the meshing portion 26. The tooth-bottom-side concave surface portion 28 extends from the dedendum-side end 26b to a tooth-bottom deepest part 28a of the internal tooth 24.

Similarly, the tooth profile contour (tooth flank shape) of the external teeth 34 is provided with a portion 36 (meshing tooth flank portion) that meshes with the opposing internal teeth 24. The meshing portion 36 is stipulated by an involute curve tooth profile or another tooth profile curve employed in the prior art. One end of a tooth-crest-side convex surface portion 37 (tooth-crest-side tooth flank portion stipulated by a convex surface) smoothly connects to an addendum-side end 36a of the meshing portion 36. The tooth-crest-side convex surface portion 37 extends from the addendum-side end 36a to a tooth-crest apex 37a of the external tooth 34. One end of a tooth-bottom-side concave surface portion 38 (tooth-bottom-side tooth flank portion stipulated by a concave surface) smoothly connects to a dedendum-side end 36b of the meshing portion 36. The tooth-bottom-side concave surface portion 38 extends from the dedendum-side end 36b to a tooth-bottom deepest part 38a of the external tooth 34.

In the present example, the tooth-crest-side convex surface portions 27, 37 and the tooth-bottom-side concave surface portions 28, 38 of the internal tooth 24 and the external tooth 34 are portions that do not contribute to meshing. Basically, these portions can be any convex surfaces and concave surfaces that do not interfere with the teeth of the opposing gear. In the present example, the convex surfaces stipulating the tooth-crest-side convex surface portions 27, 37 and the concave surfaces stipulating the tooth-bottom-side concave surface portions 28, 38 are set so that in the deepest meshing state, a gap $\Delta$ of at most 0.5m is formed between the internal tooth 24 and the external tooth 34.

$$0 < \Delta \leq 0.5\mathrm{m}$$

In the cup-shaped externally toothed gear 3, the amount of radial flexure differs in individual tooth-trace-direction positions on the external teeth 34. The amount of radial flexure in individual tooth-trace-direction positions on the external teeth 34 is $2Kmn$ ($0 < K \leq 1$). The symbol $K$ denotes a deflection coefficient, m denotes the module, and n denotes a positive integer. For example, the amount of radial flexure in ends of the external teeth on the open-end side of the externally toothed gear 3 is set to 2mn, which is a reference flexure where $K = 1$. From the open-end-side ends of the external teeth 34 toward the diaphragm-side inner ends of the external teeth 34, the amount of flexure gradually decreases from $2mn$.

In a cross-section at a right angle to the tooth in the open-end-side end of an external tooth 34, when the tooth profile shape of the external tooth 34 is set as described above, shifting corresponding to the amount of flexure is carried out in the tooth profile shape from the open-end-side end of the external tooth toward the diaphragm-side inner end of the external tooth. The internal teeth 24 of the rigid internally toothed gear 2 are given the same tooth profile shape in the tooth-trace direction. Due to the external teeth 34 being given a shifted tooth profile, it is possible to prevent interference between the external teeth and the internal teeth caused by the difference in movement loci of the teeth at individual tooth-trace-direction positions.

Fig. 2(b) is an explanatory drawing of a meshing state, shown by rack approximation, between an external tooth 34 and an internal tooth 24 provided with the tooth profile contours described above. The tooth profile of an external tooth having edges at both ends of the flat tooth crest surface is also shown as overlapping the external tooth 34. Due to the use of the external teeth 34 and the internal teeth 24 of the present example, which have edgeless tooth flank shapes, a smooth meshing state is formed between the teeth when the teeth go into mesh, reach the deepest state of mesh, and come out of mesh.

(Other embodiments)

The example described above is a case in which the present invention is applied to a cup-shaped strain wave gearing. The present invention can similarly be applied to a top-hat-shaped strain wave gearing and a flat strain wave gearing. The example described above includes an internally toothed gear serving as a rigid gear and an externally toothed gear serving as a flexible gear. Conversely, the present invention can be similarly applied to a strain wave gearing in which an externally toothed gear is provided as a rigid gear, and an internally toothed gear is provided as a flexible gear, the internally toothed gear being caused by a wave generator to flex into a non-circular shape, e.g., an ellipsoidal shape from the external side and mesh with the externally toothed gear at positions on both ends of a short axis of the ellipsoidal shape.

**Claims**

1. A strain wave gearing comprising:

   a rigid gear;
   a flexible gear capable of meshing with the rigid gear; and
   a wave generator that causes the flexible gear to flex in a radial direction and partially mesh with the rigid gear and causes positions where the flexible gear meshes with the rigid gear to move in a circumferential direction of the rigid gear along with rotation,
   wherein
   tooth profile contours of the rigid gear and the flexible gear are each provided with:

      a meshing portion where the gear meshes with the opposing gear;
      a tooth-crest-side convex surface portion that smoothly connects to an addendum-side end of the meshing portion and extends from the addendum-side end to an apex of a tooth crest; and
a tooth-bottom-side concave surface portion that smoothly connects to a dedendum-side end of the meshing portion and extends from the dedendum-side end to a deepest part of a tooth bottom.

2. The strain wave gearing according to claim 1, wherein the rigid gear and the flexible gear are both gears of module m, and the tooth-crest-side convex surface portions and the tooth-bottom-side concave surface portions are set so that a gap, which is at maximum 0.5m in a most deeply meshed state, is formed between the rigid gear and the flexible gear.

3. The strain wave gearing according to claim 2, wherein the rigid gear is an internally toothed gear; the flexible gear is an externally toothed gear that are coaxially arranged inside the rigid gear; and the wave generator is configured to cause the flexible gear to flex into an ellipsoidal shape and form the meshing portion with respect to the rigid gear at two locations.

4. The strain wave gearing according to any one of claims 1 to 3, wherein the meshing portion and the tooth-crest-side convex surface portion of each of the rigid gear and the flexible gear are machined portions that are simultaneously machined by topping gear cutting.

EP 3 795 858 A1

FIG. 1

(a)

(b)

FIG. 2

(a)

(b)

## INTERNATIONAL SEARCH REPORT

| International application No. |
| --- |
| PCT/JP2018/018612 |

**A.  CLASSIFICATION OF SUBJECT MATTER**
Int. Cl. F16H1/32(2006.01)i, F16H55/08(2006.01)i

According to International Patent Classification (IPC) or to both national classification and IPC

**B.  FIELDS SEARCHED**

Minimum documentation searched (classification system followed by classification symbols)
Int. Cl. F16H1/32, F16H55/08

Documentation searched other than minimum documentation to the extent that such documents are included in the fields searched
Published examined utility model applications of Japan    1922-1996
Published unexamined utility model applications of Japan  1971-2018
Registered utility model specifications of Japan          1996-2018
Published registered utility model applications of Japan  1994-2018

Electronic data base consulted during the international search (name of data base and, where practicable, search terms used)

**C.  DOCUMENTS CONSIDERED TO BE RELEVANT**

| Category* | Citation of document, with indication, where appropriate, of the relevant passages | Relevant to claim No. |
| --- | --- | --- |
| X | WO 2013/046274 A1 (HARMONIC DRIVE SYSTEMS INC.) 04 April 2013, paragraphs [0022], [0030]-[0032], fig. 3 & US 2014/0251048 A1, paragraphs [0042], [0052]-[0054], fig. 3 & CN 103827542 A | 1-4 |
| X | JP 2005-36937 A (HARMONIC DRIVE SYSTEMS INC.) 10 February 2005, paragraphs [0013], [0014], fig. 2 & US 2005/0066769 A1, paragraphs [0025], [0026], fig. 3 & DE 102004034823 A1 | 1, 3-4 |
| A | JP 2004-249401 A (FUJI HEAVY INDUSTRIES LTD.) 09 September 2004, paragraph [0024] (Family: none) | 4 |

☐ Further documents are listed in the continuation of Box C.          ☐ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 09.07.2018 | 24.07.2018 |

| Name and mailing address of the ISA/ Japan Patent Office 3-4-3, Kasumigaseki, Chiyoda-ku, Tokyo 100-8915, Japan | Authorized officer |
| --- | --- |
| | Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4541171 B
- WO 2016006102 A1